# EUROPEAN PATENT SPECIFICATION

(11) **EP 0 239 161 B1**
(45) Date of publication and mention of the grant of the patent: **24.02.1993**
(21) Application number: 87200458.5
(22) Date of filing: 12.03.1987
(51) Int. Cl.: B24B 5/04, B24B 49/04

(54) **Grinding machine for cylinders having members for dimensional and superficial survey and control**
Walzenschleifmaschine mit Vorrichtungen zur Überwachung der Abmessungen und der Oberfläche und zur Steuerung
Rectifieuse de cylindres avec dispositifs pour le contrôle dimensionnel et superficiel et la commande

(30) Priority: 20.03.1986 IT 1982086
(43) Date of publication of application: 30.09.1987
(73) Proprietor: POMINI FARREL S.p.A., 21053 Castellanza (Varese) (IT)
(72) Inventor: Corallo, Valeriano GIUSTINA INTERNATIONAL S.p.A., I-10099 San Mauro Torinese (Torino) (IT)
(74) Representative: Raimondi, Alfredo, Dott. Ing. Prof.

(56) References cited:
- DE-A- 2 500 895
- US-A- 3 088 250
- US-A- 3 321 869
- US-A- 3 391 497
- KLEPZIG FACHBERICHTE vol. 80, no. 12, 1972, Düsseldorf "WALZENSCHLEIFEN", pages 593 and 594 * page 593, figure 1 ;

## Description

The subject-matter of the present invention is a grinding machine for cylinders with devices for tracing and dimensional and surface checking which move and operate during working in a way independent of the movement of the carriage carrying the tool. A machine in accordance with the preamble of claim 1 is known from US-A-3088 250.

In order to carry out or repeat the grinding of cylindrical objects, such as for example cylinders for rolling mills and the like, in particular working in an automatic cycle without operators, there is a requirement for carrying out tracings of the geometry and of the surface condition of the piece during working itself in order to influence the cycle in progress as a function of that measured and to guarantee the maximum precision demanded for such work.

Such operations are carried out by means of traducers operating both in contact with the surface and at a distance from it, which, in the case of the grinding machines of a type known, are mounted on the moveable carriage supporting the grinding tool, and scan the surface following the movement of the tool.

This means that the speed of scanning the piece and the speed of machining it must be the same; however, some types of tracing require scanning times substantially longer than the times required for the tool to perform a grinding pass and therefore it is necessary either to reduce the speed of working to adapt it to that required by the tracing devices, with a consequent prolongment in grinding times, or to carry out a partial tracing of the piece with incomplete scanning of its surface during each pass by the tool, arriving at its complete tracing by statistical means after a number of passes.

Furthermore, the positioning of measuring instruments in the vicinity of the tool may lead to a reduction in the life of such devices, owing to the presence of swarf and of vapors caused by the grinding process; in addition to this, it is possible for vibrations to occur in the carriage carrying the tool as a result of the working, and such vibrations may be transferred to the measuring instruments, reducing the precision of the measurements registered by them.

There is therefore the need to provide a grinding machine which solves such problems, comprising a coanning of the piece being worked independently of the movement of the tool which is carrying out the work on the piece and also keeping the tracing instruments in a guarded position, well away from possible sources of disturbance.

Such results are achieved by the present invention, which is defined in claim 1.

Dependent claim 2 concerns an embodiment of the invention The invention will be described in more detail below with reference to the attacched drawings, in which:
Figure 1 shows a general perspective view of a grinder according to the invention;
Figure 2 shows the grinder of figure 1, in plan view;
Figure 3 shows the section according to the plane III-III of Figure 2.

As the figures show, this is a grinding machine for cylinders which comprises a rear bench 1, on which the main carriage 2 is mounted in slinding manner relative to the axis Z and carrying the tool 3, in the form of a grinding wheel.

The carrige 2 is provided with motorized devices, not shown, suitable for effecting the traversing commanded along the rear bench 1, for the entire working length envisaged.

The wheel 3 is supported by the respective bearing and powering devices 4, by means of which it is set in rotation and can be moved on the carriage 2 along the axis X, perpendicular to the axis Z, and lowered in the direction U, for the respective performance of the main movement of advance toward the piece and the precision advance movement.

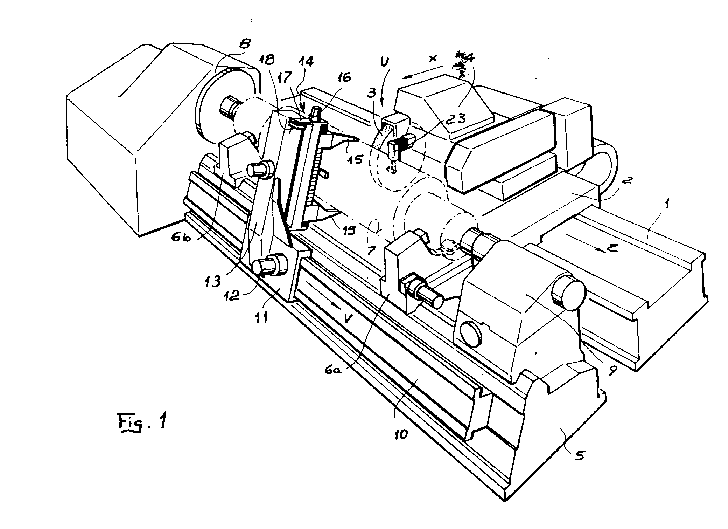

In parallel to the rear bench 1 there is also a front bench 5, on which are located the rests 6a, 6b for supporting the cylinder or cylinder to be ground 7, indicated by dot - dashed lines in Figure 1, as well as a workhead 8 and a counterhead 9, having the devices for setting the cylinder in rotation and for blocking the same in the longitudinal direction.

Also fixed to the front bench 5 is a third bench 10, which has guides for the sliding of a measuring carriage 11, moveable along the axis V, parallel to the axis Z, by means of an independent motorized device 12.

On the carriage 11 there is a projecting frame 13, extending upward, which carries a gage 14 provided with measuring arms 15, between which it can be moved by means of a motorized device 16 and respective means of transmission, the result of which is suitable for surrounding the cylinder during working and performing on it the dimensional tracing.

The ends 15a of the arms 15 are aligned with and moveable along an oblique axis C, intersecting the longitudinal axis of the cylinder 7, comprising the axis of measurement of the diameter of the piece being worked.

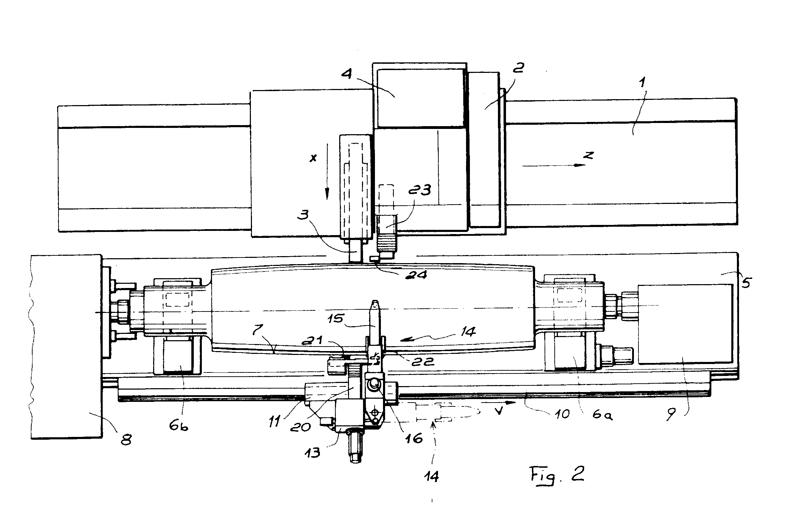

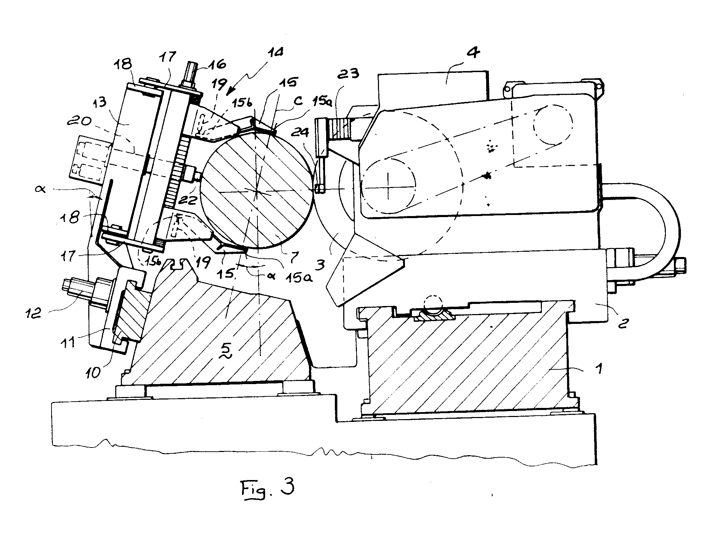

The gage 14 is supported by the frame 13 by means of protruding tongues 17, pivoted to corresponding mountings 18 of the frame, and is therefore rotatable laterally, as represented in Figure 2 by the dot-dashed line, with the aim of taking the arms 15 of the gage beyond the area of obstruction of the cylinder, so that positioning and removal of the machine is permitted. As shown in Figure 3, at the ends 15b of the arms 15 of the gage are connected the position transducers 19, suitable for tracing the movements of the arms themselves and signalling their contact with the surface of the cylinder.

The frame 13 also has a telescopic arm 20, which bears a transducer 21 for measuring the roughness of the piece, and on which there is also a transducer for measuring the structur al defects 22 of the surface of the piece being worked, operating at a distance from the piece itself.

The carriage 4 carries, in position alongside the wheel 3, a slide 23, moveable perpendicularly to the axis of the cylinder being worked, on which there is a measuring tranducer 24, suit able for determining its distance from the surface of the piece to be ground, for example by the method of eddy currents, and such as to permit a check to be kept in this way on the wear of the wheel.

The slide 23, is operated, for its movement perpendicular to the axis of the cylinder 7, by means of perspective motorized devices, not shown.

The frame 13 is provided with a slope at an angle with respect to the vertical, of between 10° and 30°, or preferably of 15°, which keeps its center of gravity in the position close to tha carriage 11, and on its vertical edge, so as to assure the maximum stability for the gage 14, and thus guarantee greatest reliability of the measurements made.

To such an end, particular importance is attributable to the positioning of the gage and of the other measuring devices on a carriage separate from the wheel-carrying carriage 2, and at a distance from it, because in this way such instruments are safe from the swarf and vapors due to grinding, and furthermore the inevitable vibrations due to action of the wheel are not tranferred to the measuring instruments, provided with independent support and movement devices.

## Claims

1. Grinding machine for cylinders with devices for tracing and dimensional and surface checking comprising a front bench (5) provided with rests (6a, 6b) for supporting the piece being worked and a head (8) and a counterhead (9) for rotation and longitudinal restraint of the same, and a rear bench (1 ), supporting a carriage ( 2) longitudinally moveable on it, in parallel to the axis of the piece, on which there is a wheelhead (4) moveable on it perpendicularly to the axis of the piece, bearing the grinding tool (3), being furthermore present a third bench (10), solid with the front bench (5), on which is moveably mounted, with axis parallel to the axis of rotation of the said piece, a measuring carriage (11) characterized in that said measuring carriage (11) supports a frame (13) extending upward, on which there is a gage (14) having a pair of arms (15), suitable for being arranged around the piece being worked, in contact with two diametrically opposed surface areas of the same and associated with means of tracing the movements of the arms themselves in contact with the piece, being furthermore provided a telescopic arm having an axis perpendicular to the axis of rotation of the piece and having a portion (20) which is moveable with respect to the piece itself, and at the end of which there are instruments (22) for tracing the surface and structural characteristics of the cylinder being worked, without contact with the surfaces itself, said combination of elements actuating measurements carried out at the same time as machining of the cylinder in a way independent of it and with compensation of eventual geometrical errors of the guides.

2. Grinding machine according to claim 1 characterized in that the frame 13 is provided with a slope at an angle with respect to the vertical, of between 10° and 30°, or preferably of 15°, which keeps its center of gravity in a position close to the carriage (11).

## Patentansprüche

1. Walzenschleifmaschine mit Vorrichtungen zum Abtasten und zum Überwachen der Abmessungen und der Oberfläche, mit einer vorderen Werkbank (5) mit Auflagern (6a, 6b) zum Lagern und Haltern des zu bearbeitenden Werkstücks, mit einem Support (8) und einem Gegensupport (9) für die Werkstücksrotation und die Längs-Einspannung des Werkstücks, sowie mit einer rückwärtigen Werkbank (1), welche auf ihr längsbeweglich und in paralleler Ausrichtung zu der Achse des Werkstücks einen Schlitten (2) trägt, auf welchem sich ein Schleifspindelstock (4) befindet, welcher auf diesem Schlitten rechtwinklig zu der Achse des Werkstücks beweglich ist und das Schleifwerkzeug (3) trägt, ferner mit einer fest mit der vorderen Werkbank (5) verbundenen dritten Werkbank (10), auf welcher ein Meßschlitten (11) in bewegbarer Weise angeordnet ist, wobei dessen Achse parallel zur Achse der Rotation des Werkstücks ausgerichtet ist, **dadurch gekennzeichnet,** daß der Meßschlitten (11) einen sich nach oben erstreckenden Rahmen (13) trägt, auf welchem ein Meßinstrument (14) mit einem Paar von Armen (15) vorgesehen ist, welche dazu geeignet sind, um das zu bearbeitende Werkstück herum angeordnet zu werden, wobei diese Arme (15) in Berührung mit zwei diametral einander entgegengesetzten Oberflächenbereichen des Werkstücks stehen und mit Mitteln zum Abtasten der Bewegungen der Arme selbst verbunden sind, wenn sich diese in Berührung mit dem Werkstück befinden, wobei weiterhin ein Teleskoparm mit einer Achse vorgesehen ist, welche rechtwinklig zu der Rotationsachse des Werkstücks verläuft und einen Abschnitt 20 aufweist, welcher selbst in bezug auf das Werkstück beweglich ist und an dessen Ende Instrumente 22 zum Abfühlen/Abtasten der Oberfläche und von Struktureigenschaften der zu bearbeitenden Walze vorgesehen sind, und zwar ohne Berührung mit den Oberflächen selbst, wobei die Kombination dieser Elemente die Durchführung von Messungen bewerkstelligt, welche zur gleichen Zeit wie die Bearbeitung des Zylinders in einer von dieser unabhängigen Art und Weise und mit Kompensation von eventuellen geometrischen Fehlern der Führungen erfolgen.

2. Walzenschleifmaschine nach Anspruch 1, **dadurch gekennzeichnet,** daß der Rahmen (13) gegenüber der Vertikalen eine Neigung unter einem Winkel aufweist, welcher zwischen 10° und 30° liegt, oder vorzugsweise 15° beträgt, wodurch der Schwerpunkt des Rahmens in einer Lage nahe bei dem Schlitten (11) gehalten ist.

## Revendications

1. Rectifieuse de cylindre avec des dispositifs de traçage et de vérification dimensionnelle et superficielle, comprenant un banc avant (5) muni de pièces d'appui (6a, 6b) pour supporter la pièce à rectifier et une tête (8) et une contre tête (9) pour la tenue longitudinale et la mise en rotation de celle-ci et un banc arrière (1) supportant un chariot (2) mobile longitudinalement sur celui-ci, parallèlement à l'axe de la pièce, chariot sur lequel se trouve un porte meule (4) mobile sur celui-ci, perpendiculairement à l'axe de la pièce, portant l'outil de rectification (3) et un troisième banc (10) étant de plus présent, solidaire du banc avant (5) sur lequel est monté mobile, avec un axe parallèle à l'axe de rotation de ladite pièce, un chariot de mesure (11) caractérisé en ce que lèdit chariot de mesure (11) supporte un châssis (13) s'étendant vers le haut, sur lequel se trouve une jauge (14) dotée d'une paire de bras (15), destinés à être disposés autour de la pièce en cours d'usinage, en contact avec deux zones de surface diamétralement opposées de cette dernière et associés à des moyens de traçage des mouvements des bras eux-mêmes en contact avec la pièce, un bras télescopique étant en outre prévu, présentant un axe perpendiculaire à l'axe de rotation de la pièce et ayant une partie (20) qui est mobile par rapport à la pièce elle-même, et à l'extrémité de laquelle on trouve des instruments 22 de traçage de la surface et des caractéristiques structurelles du cylindre en cours d'usinage, sans contact avec les surfaces elle-mêmes, ladite combinaison d'éléments exécutant des mesures réalisées en même temps que l'usinage du cylindre de manière indépendante de celui-ci et avec compensation des éventuelles erreurs géométriques des guides.

2. Rectifieuse selon la revendication 1, caractérisée en ce que le châssis (13) est muni d'un plan incliné avec un angle, par rapport à la verticale, entre 10 et 30°, ou préférentiellement de 15°, et qui maintient son centre de gravité dans une position proche du chariot (11).
